# EUROPEAN PATENT APPLICATION

(11) **EP 2 284 813 A2**
(43) Date of publication of application: **16.02.2011**
(21) Application number: 10183719.3
(22) Date of filing: 14.02.2001
(51) Int. Cl.: G07F 19/00, G06Q 20/00

(54) **Electronic funds transfers-zipfund**

(30) Priority: 14.02.2000 AU PQ556600
(62) Divisional of application: 01905485.7
(71) Applicant: Ong, Yong Kin (Michael), City Beach, Western Australia 6015 (AU)
(72) Inventor: Ong, Yong Kin (Michael), City Beach, Western Australia 6015 (AU)
(74) Representative: Vossius & Partner

(57) **Abstract**

The invention provides a computer-implemented method of conducting an online transaction.

## Description

This invention relates to functionality, performance and provision of secure, controlled, and reliable transaction of funds using Internet facilities as well as other commercial and/or industrial online data transfers facility.

The present e-commerce environment and systems do not give people the confidence in shopping online. People are concerned about security issues when using their credit cards/debit cards to make purchases. They are worried that by using their credit cards/debit cards to make purchases online it will compromise the security of their credit cards/debit cards for frauds. Should such information go to the wrong hands they may or could be accountable for financial implications. This invention continues this process but adds security in the transaction to ensure fraud is eliminated.

The system in place also enables the usage of other financial accounts including credit card and debit card for secure electronic fund transfers for the purpose of e-commerce via business-to-consumer and/for business-to-business applications. Such facilities include moving funds from one financial account to another within one and/or more financial institutions via internal and/or external data transfer facilities through the usage of electronic communications networks.

In addition to the use of credit card/debit card facility, this invention enables the use of all exiting financial accounts for online trading and/or transaction.

This invention also introduces a new online financial account known as an Internet Financial Account. An Internet Financial Account (hereafter known as IFA) is available either as a credit account or a charge account.

The electronic fund transfers - ZIPFUND (hereafter known as ZIPFUND) is an invention that eliminates such security implications.

ZIPFUND generates its own transaction number that has a unique identifier that tracks a user identity. This includes a user account details and transaction number.

ZIPFUND checks its database for user details to ensure validity of the user. User will not be permitted to use ZIPFUND if he or she is found to be not a valid user.

ZIPFUND allocates financial transactions in an orderly process such that each transaction is unique. A transaction can only be processed when sufficient fund is available in a user account.

ZIPFUND allocates financial transactions through user engagements. This includes a user is able to determine the amount of funds in a financial transaction. A transaction will only be complete if a user has sufficient funds in his or her account. This provides a user absolute control over his or her transaction as each transaction is for each purchase and each purchase is for a sum total on a financial transaction.

ZIPFUND completes a full transaction when a merchant accepts the user transaction through an allocated ZIPFUND transaction identifier. This is processed via the Internet using e-commerce facility.

ZlPFUND validates sufficient funds with links to financial institutions, credit cards/debit cards accounts, and its own financial database system.

ZIPFUND prevents merchants from using unauthorised credit card/debit card transaction when such information has been given to a merchant from an earlier purchase or transaction.

ZIPFUND has its own security encryption and decryption system to check and process each transaction.

ZIPFUND validates sufficient funds availability of each user through its database and links with financial institutions to ensure a valid transaction.

ZIPFUND vets both users and merchants to ensure secure financial transactions.

ZIPFUND works with proven financial institutions systems. This is processed via system interface links, common system interface platforms and system portability.

A user (4) of ZIPFUND accesses this facility via an Internet connection. All users of ZIPFUND must have an account with ZIPFUND to use the facility. The account shall be specific to a registered user.

All information pertaining to the use of ZIPFUND is held in confidence and in compliance with the Privacy Act and Laws relating.

A user may at his or her discretion choose to obtain an Internet Financial Account (IFA) with ZIPFUND. ZIPFUND will only issue an IFA to approved clients.

An E-commerce Merchant (3) is a person or persons or an entity or entities who use an Internet site to do business with Internet clients. E-commerce Merchants must be registered with ZIPFUND to use the facility. This ensures that the E-commerce Merchant site is a secure site and Internet clients are aware of the certification. E-commerce Merchants are required to obtain ZIPFUND transaction identifier from Internet clients prior to confirm payments. These ZIPFUND transaction identifiers need to be confirmed by ZIPFUND in order to secure payments from financial institutions. ZIPFUND has a database of all approved E-commerce Merchants.

A Financial Institution (1) is an entity that provides an approved level of funds that an Internet user (client) and/or an E-Commerce Merchant have with them.

For the case of Internet users such funds can be a credit account via his or her credit card account. With ZIPFUND functions, such funds are also available to all existing account type, for example cheque account, savings account, or an IFA.

E-commerce Merchants need to have an account with financial institutions in order to process their payments to a financial institution. With ZIPFUND functions. ZIPFUND is responsible to transact all payment transactions to a nominated financial institution.

Financial Institutions need to provide ZIPFUND an access to a client's financial information that includes approved funds availability. This enables ZIPFUND to confirm an Internet user's financial standing.

The issuing of an IFA to a consumer is an understanding between ZIPFUND and financial institutions.

ZIPFUND (2) is responsible for services with Internet Users, E-commerce Merchants and Financial Institutions.

ZIPFUND is responsible to provide E-commerce Merchants an approved transaction number to the ZIPFUND transaction identifier(s) sent by them via a secure network. ZIPFUND is responsible to provide Financial Institutions an approved transaction number to each ZIPFUND transaction identifier(s) sent by E-commerce Merchants via a secure network.

ZIPFUND has the capability not to use original credit card and/or debit card account number for transaction processing. Instead ZIPFUND generates new IFA number or ZIPFUND's own credit card/debit card account number with reference to original credit card/debit card number.

ZIPFUND is responsible to ensure absolute security for Internet Users to carry out their business-to-consumer transactions. This is possible through ZIPFUND's proprietary software, accounting systems, process flow, system design and methodology, data definition and special control process which is proprietary information.

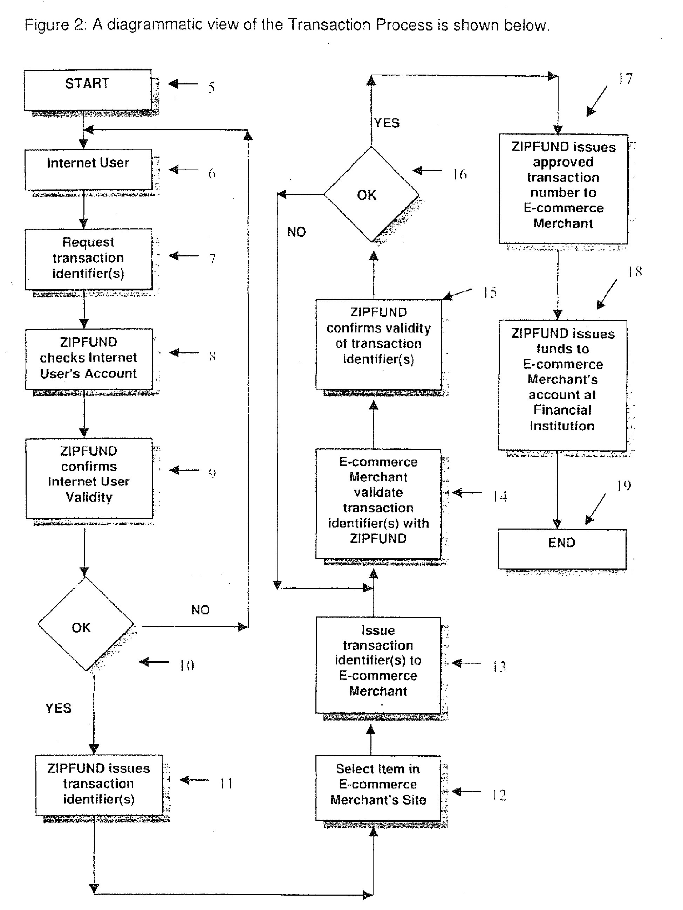

Figure 2 (5) shows the start of a transaction process.

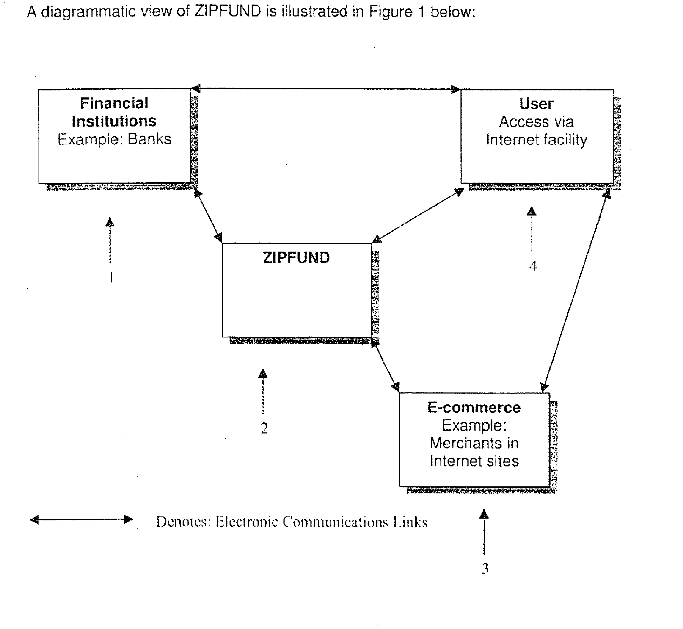

Internet User or consumer (6) is the same as item (4) of Figure 1. Internet User (1) access to ZIPFUND (2) via the Internet. There are security process such as network security access controls and user profile password checks before access to ZIPFUND (2) is approved. The Internet User (1) had earlier registered to be a ZIP account holder.

The Internet User (1) requests for transaction identifier(s) for his/her online shopping needs. This is shown as (7) in Figure 2.

ZIPFUND (2) checks Internet User (6) to ensure he/she is a valid user. This is shown as (8) in Figure 2.

ZIPFUND (2) confirms validation process shown as (9) on Figure 2.

The decision process is shown as (10) on Figure 2. If the Internet User (1) is confirmed as a valid user, the task is passed on shown as (11) on Figure 2. Otherwise, the Internet User (6) is rejected from ZIPFUND (2).

Assuming that Internet User (6) is confirmed as a valid user he/she is preceded to task (11). This task is when ZIPFUND (2) issues transaction identifier(s) as requested by the Internet User (6).

Internet User (6) then select item in E-Commerce Merchant's Site. This task is shown as (11) on Figure 2.

Once Internet User (6) decided on the item(s) he/she issued transaction identifier(s) to the E-Commerce Merchant. This task is shown as (13) on Figure 2.

E-Commerce Merchant (3) validates the transaction identifier(s) with ZIPFUND (2). This task is shown as (14) on Figure 2.

ZIPFUND (2) confirms validity of transaction identifier(s) from E-Commerce Merchant (3). This task is shown as (15) on Figure 2. There are security process such as network security access controls and merchant profile 'password' checks before access to ZIPFUND (2) is approved.

The decision process is shown as (16) on Figure 2. If the transaction identifiers are confirmed as valid, the task is passed on shown as (17) on Figure 2.

ZIPFUND (2) issues approved transaction number to E-commerce Merchant (3). This informs the E-Commerce Merchant that his/her transaction identifiers are accepted. If the transaction identifiers were rejected, task (16) will advise E-commerce Merchant of his rejection and reason(s) for it.

Assuming that the transaction identifiers were accepted, ZIPFUND issues to E-commerce Merchant's (3) account at his/her Financial Institution (1) the credit amount due. This task is shown as (18) on Figure 2. There are security process such as network security access controls and ZIPFUND profile 'password' checks before access to Financial Institution (1) is approved.

Figure 2 (19) shows the end of a transaction process.

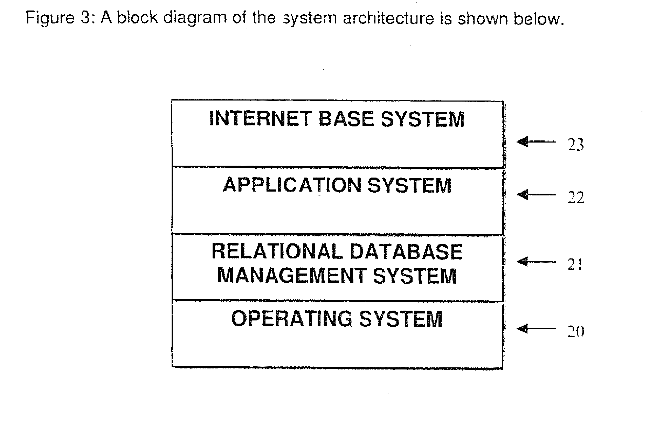

Figure 3 item (20) shows the under-layer of ZIPFUND system architecture.

Generally this is where the operating system resides.

The next level is the Relational Database Management System (21). This is the data collection centre of the system.

The Relational Database Management System (21) interacts with the Application System (22). The Application System interacts with Internet Base System (23) that links ZIPFUND (2) to the rest of the world.

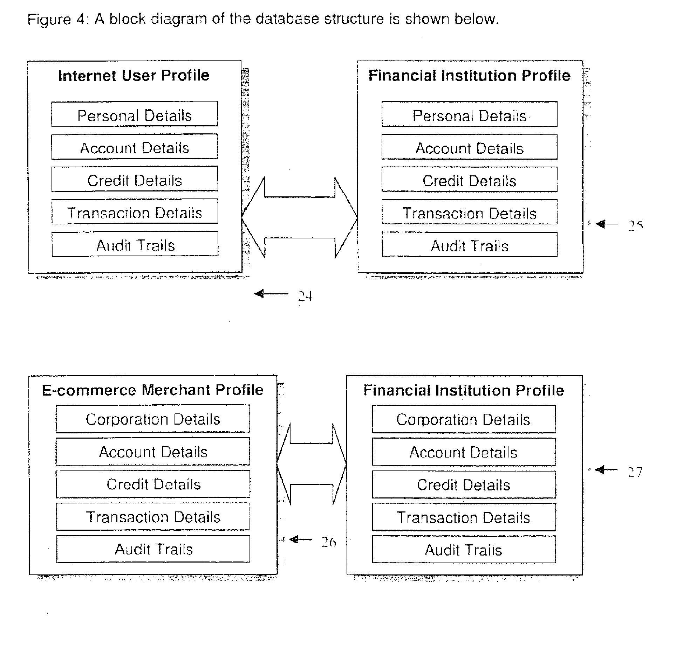

Figure 4 item (24) shows Internet User Profile. The Internet User Profile (24) is a repository of information concerning a particular Internet User (4) on Figure 1. This is used for validation with Financial Institution Profile shown as item (25).

Figure 4 item (26) shows E-commerce Merchant Profile. The E-Commerce Merchant Profile (26) is a repository of information concerning a particular E-Commerce Merchant (3) on Figure 1. This is used for validation with Financial Institution Profile shown as item (27). It is accepted that the Profile for E-Commerce Merchant (3) is different from Internet User (4)

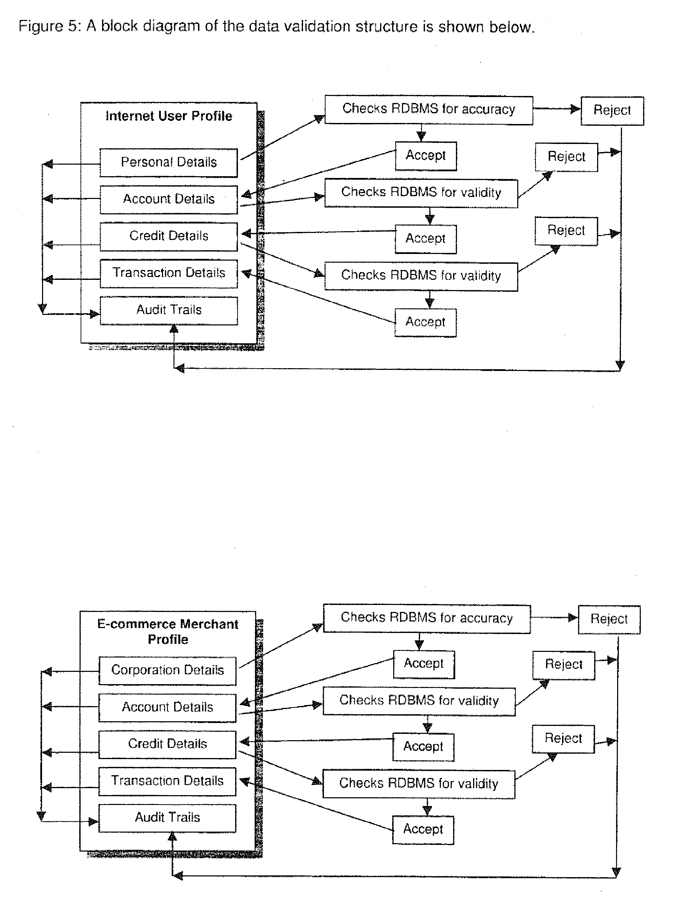

Figure 5 shows the data validation structure (process). All activities are tracked and logged onto an audit trail in ZIPFUND (2).

ZIPFUND is able to provide the following functionality to support E-commerce:
- True Online System
   (process all transactions online)
- Purchasing System
   (all users [clients] to make purchases online)
- Payment System
   (supports other supplier's [merchant and/or financial institution] payment system and its own [ZIPFUND] payment system)
- Password Control
   (has password validation process in the system)
- Credit and Debit card support
   (enable usage of other supplier's [merchant and/or financial institution] credit card/debit card and its own [ZIPFUND] credit card/debit card facility to make purchases and payments)
- ZIPFUND credit card system
   (provide compatible credit card facility)
- Support all financial institution accounts
   (allow transaction to be processed by all types of bank accounts, for example savings, cheques). Internet users (clients) can use all types of bank accounts to make online purchases and payments provided they are valid ZIPFUND users (clients).
- Controlled purchase amount(s) through usage of transaction identifier(s)
   (all users [clients] are able to control the amount of funds for each transaction)
- User validation system
   (system validates user [client] identification)
- Merchant validation system
   (system validates merchant identification)
- Hacker protection system through encryption/decryption system and proprietary system architecture.

The following items describe preferred embodiments of the invention:
1. ZIPFUND is a secure Electronic Funds Transfers system that enables consumers and businesses to transact funds online without fear of frauds and hackers' interactions or interventions (penetrations).
2. Electronic funds transfers using ZIPFUND system can be made using the Internet and/or other data transfer facilities through internal and/or external data transfer facilities using electronic communications networks.
3. ZIPFUND enables consumers to make purchases from web-site merchants without concerns over credit card/debit card frauds. It also enables consumers to make payments of their purchases online too.
4. ZIPFUND is able to provide secure electronic funds transfers, as it is an integrated system that links consumers and/or businesses with e-commerce merchants and financial institutions with its Internet Financial Account (IFA) system.
5. Internet Financial Account (IFA) system is initially an online financial account. The account may function as a credit card or debit card if the consumer or user applied to use it for such purpose.
6. ZIPFUND enables users to use their existing accounts in their financial institutions to make purchases and to pay for the purchases. Examples of these accounts are credit card/debit card account, savings account, cheque account, home loan account and/or interest saver account.
7. ZIPFUND is able to integrate with other credit card/debit card accounts and in so doing able to offer these credit card/debit card accounts the security comfort required by its users (consumers).
8. ZIPFUND allocates financial transactions through user engagements. This includes a user is able to determine the amount of funds in a financial transaction. A transaction will only be complete if a user has sufficient funds in his or her account. This provides a user absolute control over his or her transaction as each transaction is for each purchase and each purchase is for a sum total on a financial transaction.
9. ZIPFUND has a user and merchant validation system. This provides a certification of fraud-free sites (safe sites) of E-commerce Merchants. ZIPFUND keeps a secure database of all certified E-Commerce Merchants.
10. ZIPFUND has the capability not to use original credit card and/or debit card account number for transaction processing. Instead ZIPFUND generates new IFA number or ZIPFUND's own credit card/debit card account number with reference to original credit card/debit card number.
11. ZIPFUND tracks transactions using transaction identifier and transaction number. These are unique numbers and specifically assigned to a user (consumer) and an E-commerce Merchant.
12. ZIPFUND ensures absolute security for Internet Users to carry out their business-to-consumer transactions. This is possible through ZIPFUND's proprietary software, accounting systems, process flow, system design and methodology, data definition and special control process which is proprietary information.

## Claims

1. A computer-implemented method of conducting an online transaction, said method comprising:
providing on a computer a transaction manager having a registration module for holding registration information of a user, and for holding registration information of a merchant; an input; a checking means; an identification generator; a validating means; a transaction number generation means; an output; and a payment means;
registering a user with the transaction manager (2) by storing registration information of the user in the registration means;
registering a merchant with the transaction manager (2) by storing registration information of the merchant in the registration means;
receiving at the input of the transaction manager a request by the user for a unique transaction identifier to cover a purchase;
checking the validity of the user using the checking means;
outputting to the user a unique identification of a transaction generated by the identification generation means from the output if the user is valid;
the user sending from a user computer to a computer associated with the merchant a request for a transaction to purchase a product or service, the request comprising the transaction identification and a user nominated account identifier;
receiving at the input of the transaction manager the transaction identification and the user nominated account identifier provided by the merchant computer;
confirming payment of the transaction in respect of a registered user's financial institution account identified by the user nominated account identifier comprising validating the received transaction identification using the validating means, then outputting from the output to the merchant a unique transaction number generated by the transaction number generation means if the transaction identification is valid; and
causing an online payment to be made by an external financial institution deducting the payment from the user's financial institution account identified by the account identifier and
depositing the payment into the merchant's financial institution account using the payment means when the received transaction identification is validated.

2. A method of conducting an online transaction as claimed in claim 1, wherein the transaction manager deducts payment from the user's financial institution account identified by the account identifier at the time of the request of the unique transaction identifier.

3. A method of conducting an online transaction as claimed in claim 1, wherein the transaction manager deducts payment from the user's financial institution account identified by the account identifier at the time of the transfer of money to the merchant.

4. A method of conducting an online as claimed in claim 1, wherein the user's account is with the transaction manager and the transaction manager is not a financial institution.

5. A method of conducting an online transaction as claimed in claim 1, wherein the transaction manager issues a new account from an account issue means, where the new account that corresponds to an existing account with a financial institution, whereby the new account details are used by the user and merchant in place of the existing account details.

6. A method of conducting an online transaction as claimed in claim 5, wherein the transaction manager uses the new account details to look up the existing account details in a database and the existing account details are used by the transaction manager to conduct the financial institution to deduct money to cover the purchase from the user's existing account.

7. A method of conducting an online transaction as claimed in claim 1, wherein the user's registration details are stored in a database of the transaction manager.

8. A method of conducting an online transaction as claimed in claim 7, wherein the merchant's registration details are stored in the database including a unique merchant identification.

9. A method of conducting an online transaction as claimed in claim 7, wherein the user's request for the unique transaction identifier is validated by the checking means checking the user's details stored in the database of the transaction manager.

10. A method of conducting an online as claimed in claim 8, wherein when the merchant forwards the unique identification number to the transaction manager, the merchant's unique identifier is sent to the transaction manager, whereby validating the merchant's identification is checked by the validating means of the transaction manager before sending the transaction number to the merchant.

11. A method of conducting an online as claimed in claim 1, wherein the transaction manager checks if sufficient funds are available to cover the transaction and the transaction number is only provided to the merchant if sufficient funds are available.

12. A computer implemented transaction manager (2) for conducting an online transaction, said transaction manager comprising:
a computer, wherein said computer is configured to execute computer-executable code comprising:
a registration means (21,22) for registering a user (24);
a merchant registration means (21,22) for registering a merchant;
a user request input means (21,22) for receiving a user request (7) for a unique transaction identifier to cover a purchase;
a checking means (21,22) for checking (9) the validity of the user;
an identification generation means that generates an unique transaction identification if the user is valid;
a transaction identification generator that generates a unique transaction identification;
a transaction identification input means for receiving the transaction identification and a user nominated account identifier after it has they have been provided by the user to the merchant as part of a request (14) to purchase a product service;
a validating means (21,22) for confirming the payment of the transaction in respect of a registered user's financial institution account identified by the user nominated account identifier comprising validating (15) the received transaction identification;
a transaction number output means (21,22,23) for providing the merchant with the unique transaction number only if the transaction identification has been validated and is valid; and
a payment means (21,22) for causing payment to be made by an external financial institution deducting the payment from the user's financial institution account identified by the nominated account identifier and depositing the payment into the merchant's financial institution account (18) when the received transaction identification is validated.

13. The transaction manager of claim 12, wherein the transaction manager further comprises a means for deducting money from a user's account to cover the money paid to the merchant.

14. The transaction manager of claim 12, wherein the transaction manager comprises means for issuing a new account that corresponds to an existing account with a financial institution, whereby the new account details are used by the user and merchant in place of the existing account details.

15. The transaction manager of claim 14, wherein the transaction manager is configured to use the new account details to look up the existing account details and the existing account details are used by the transaction manager with the financial institution.

16. The transaction manager of claim 12, wherein the registration means of the transaction manager comprises a database storage for storing the user registration details.

17. The transaction manager of claim 16, wherein database storage is also for storing the merchant's registration details including a unique merchant identification.

18. The transaction manager of claim 16, wherein transaction manager is configured to validate the user's request for the unique transaction identifier by checking the user's details stored in the database storage.

19. The transaction manager of claim 12, wherein the transaction manager is configured to check if sufficient funds are available to cover the transaction and the transaction number is only provided to the merchant if sufficient funds are available.
